# EUROPÄISCHE PATENTSCHRIFT

(11) **EP 2 933 124 B1**
(45) Veröffentlichungstag und Bekanntmachung des Hinweises auf die Patenterteilung: **14.08.2019**
(21) Anmeldenummer: 14164617.4
(22) Anmeldetag: 14.04.2014
(51) Int. Cl.: B60G 9/00

(54) **NUTZFAHRZEUG MIT ACHSANSCHLAG**
Commercial vehicle with axle stop
Véhicule utilitaire avec butée d'essieu

(43) Veröffentlichungstag der Anmeldung: 21.10.2015
(73) Patentinhaber: Schmitz Cargobull AG, 48341 Altenberge (DE)
(72) Erfinder: Kötter, Jürgen, 49545 Tecklenburg (DE); Kolb, Jakob, 48308 Senden (DE)
(74) Vertreter: Cohausz & Florack

(56) Entgegenhaltungen:
- EP-A1- 0 247 284
- DE-A1- 19 941 230
- DE-A1-102008 030 382
- US-A- 2 735 673
- US-A- 4 541 653
- US-A- 4 858 949
- US-A1- 2003 025 288
- US-A1- 2004 056 446
- US-A1- 2014 035 248

## Beschreibung

Die Erfindung betrifft ein Nutzfahrzeug, insbesondere Lastkraftwagen, Anhänger oder Sattelauflieger, mit wenigstens einer Rahmenstruktur, wenigstens einer Achseneinheit und wenigstens einer eine Anschlagfläche für die Achseneinheit bereitstellenden Anschlageinrichtung, wobei die Anschlageinrichtung ein an der Rahmenstruktur festgelegtes Montageelement und ein zwischen dem Längsträger und der Anschlagfläche vorgesehenes Distanzstück aufweist, wobei das Distanzstück unverlierbar und formschlüssig am Montageelement festgelegt ist. Ein derartiges Nutzfahrzeug ist bereits aus der EP 0 247 284 A1, sowie aus der DE 10 2008 030382 A1 bekannt.

Nutzfahrzeuge der genannten Art werden insbesondere zum Transport von Gütern im öffentlichen Straßenverkehr eingesetzt. Im Falle von Lastkraftwagen oder dergleichen sind die Nutzfahrzeuge selbst angetrieben. Es sind aber auch verschiedene Arten von Anhängern bekannt, die von einem Zugfahrzeug gezogen werden. Zum Transport von Gütern weisen die Nutzfahrzeuge sogenannte Nutzfahrzeugaufbauten auf, die hierfür den Laderaum zur Verfügung stellen, wobei der Laderaum abgeschlossen oder offen sein kann. Dies hängt ab von dem jeweiligen Nutzfahrzeugaufbau.

Bei sogenannten Planenaufbauten ist der Laderaum durch wenigstens eine seitliche Plane verschließbar. Typischerweise sind die beiden Längsseiten sowie das Dach mit einer Plane verschlossen. Kann die Plane wenigstens an einer Längsseite durch Verschieben nach vorne und/oder hinten geöffnet werden, werden Planenaufbauten auch als Curtainsider bezeichnet. Bei Kofferaufbauten wird der Laderaum im Gegensatz zu Planenaufbauten durch feste Wände und ein festes Dach begrenzt. Die Wände und das Dach sind dabei typischerweise als mehrschichtige Paneele mit zwei strukturgebenden äußeren Decklagen und einer Kernlage aus einem geschäumten Kunststoff ausgebildet. Kofferaufbauten werden daher beispielsweise zum Trockentransport feuchtigkeitsempfindlicher Güter und/oder aufgrund der guten Wärmedämmung der Kernlage für Kühltransporte von temperaturempfindlichen Gütern eingesetzt.

Daneben gibt es noch Pritschenaufbauten, die nach oben und teilweise auch zur Seite offen sind, den Laderaum also nicht vollständig umschließen. Gleiches gilt für sogenannte Muldenaufbauten mit insbesondere wannenförmigen Mulden, die beispielsweise der Aufnahme von Schüttgütern, wie Erde, Sand, Bauschutt, Asphalt, Abfall und dergleichen dienen.

Die Nutzfahrzeuge weisen unabhängig vom jeweiligen Nutzfahrzeugaufbau ein Chassis auf, das eine Rahmenstruktur aus Längsträgern und Querträgern bildet. Das Chassis umfasst zudem wenigstens eine Achseneinheit. Oftmals ist eine Mehrzahl von Achseneinheiten vorgesehen die federnd gegenüber der Rahmenstruktur gelagert sind, so dass der Abstand zwischen der Achse und der Rahmenstruktur des Chassis beim Ein- und Ausfedern variieren kann.

Zur Federung von Nutzfahrzeugen der genannten Art kommen beispielsweise sogenannte Luftfederungen mit Luftbälgen zum Einsatz. Die Luftbälge sind mit Druckluft gefüllt, die dem Einfedern des Nutzfahrzeugchassis eine Gegenkraft entgegensetzt. Dabei kann der Luftdruck in den Luftbälgen über Niveauregelungsventile so geregelt werden, dass die Wagenhöhe des Nutzfahrzeugs unabhängig von der Beladung konstant bleibt. Bei Luftmangel senkt sich das Nutzfahrzeug ab, bis das Chassis mit einer Anschlagfläche einer Anschlagseinrichtung, die auch als Achsanschlag bezeichnet wird, auf der Achseneinheit aufliegt. Auf diese Weise wird verhindert, dass sich der Nutzfahrzeugaufbau auf die Räder oder das Chassis absenkt, was zu einer Beschädigung der Räder, des Chassis oder des Nutzfahrzeugaufbaus führen könnte. Alternativ oder zusätzlich könnte sich das Chassis auf Teile des Fahrwerks absenken, die nicht stabil genug ausgebildet sind, um das Chassis beschädigungsfrei zu tragen. Wenn sich das Chassis zu weit absenkt, besteht zudem die Gefahr, dass der Faltenbalg der Luftfederung der Achseneinheit geklemmt und somit beschädigt wird.

Nutzfahrzeuge eines bestimmten Typs sind untereinander nicht unbedingt identisch. Die Nutzfahrzeuge können vielmehr je nach Kundenwunsch unterschiedliche Nutzfahrzeugaufbauten, Fahrwerke, Chassis und/oder Sonderausstattungen aufweisen. Dies hat Einfluss auf die Höhe, um die sich der Nutzfahrzeugaufbau bzw. das Chassis absenken kann, bevor sich das Chassis mit der Anschlagfläche der Anschlageinrichtung auf der Achseneinheit abstützt, um Beschädigungen des Nutzfahrzeugs zu vermeiden.

Gleichzeitig ist zu beachten, dass im normalen Betrieb einerseits die Anschlageinrichtung des Nutzfahrzeugs nicht in Anlage mit der Achseneinheit kommt und andererseits der Federweg der Federung durch die Anschlageinrichtung nicht zu sehr beschränkt wird. Um die Fahrhöhe des Nutzfahrzeugs an die Höhe der für das Be- und Entladen des Nutzfahrzeugs vorgesehenen Laderampen und abhängig von der maximal zulässigen Höhe des Nutzfahrzeugs an die Höhe der aufzunehmenden Ladung anpassen zu können, sollte das Chassis bzw. die Federung möglichst weit einfedern können. Je weiter das Chassis bzw. die Federung aus einer Ausgangsstellung einfedern kann, d.h. je größer der zur Verfügung stehende Federweg ist, desto komfortabler für die Ladung kann die Federung eingestellt werden. Steht dagegen nur ein geringer Federweg zur Verfügung, muss die Federung verhältnismäßig hart eingestellt werden. Stoßempfindliche Ladung kann dann evtl. Schaden nehmen.

Im Ergebnis ist es erforderlich, unterschiedliche Nutzfahrzeuge mit unterschiedlichen Anschlageinrichtungen zu versehen, deren Anschlagflächen einen unterschiedlichen Abstand von der Rahmenstruktur aufweisen können. Dazu weisen die Anschlageinrichtungen ein Montageelement und ein Distanzstück auf. Das Montageelement ist dabei an der Rahmenstruktur festgelegt und kann in gleicher Weise mit unterschiedlichen Distanzstücken verwendet werden, die letztlich den Abstand zwischen der Anschlagfläche für die Achseneinheit und einer Unterseite der Rahmenstruktur definieren. Das jeweilige Distanzstück ist mit dem jeweiligen Montageelement verschweißt, um eine sichere und dauerhafte Verbindung bereitzustellen.

Die Verwendung unterschiedlicher Anschlageinrichtungen bei ansonsten gleichartigen Nutzfahrzeugen führt zu einer aufwändigeren und kostenintensiveren Herstellung der Nutzfahrzeuge. Einerseits bedarf es einer entsprechenden Lagerhaltung, um unterschiedliche Achsanschläge in ausreichender Anzahl bereitzuhalten. Andererseits muss schon zu einem recht frühen Zeitpunkt der Achsanschlag festgelegt werden, was die Flexibilität der Fertigung einschränkt.

Der vorliegenden Erfindung liegt somit die Aufgabe zugrunde, die Nutzfahrzeuge der eingangs genannten und zuvor näher beschriebenen Art derart auszugestalten und weiterzubilden, dass eine definierte Begrenzung des Federwegs und eine verbesserte Kraftableitung ermöglicht wird.

Diese Aufgabe ist bei einem Nutzfahrzeug nach dem Oberbegriff des Anspruchs 1 dadurch gelöst, dass die Anschlagfläche durch das Montageelement gebildet wird.

Dadurch wird ein modularer Aufbau der Anschlageinrichtung ermöglicht mit dem Effekt, dass einerseits eine hohe Anzahl an Gleichteilen verwendet und andererseits noch sehr spät im Herstellungsprozess des Nutzfahrzeugs entschieden werden kann, welche Anschlageinrichtung vorgesehen wird. Bis dahin kann die Fertigung von Nutzfahrzeugen möglichst identisch erfolgen. Des Weiteren wird die Lagerhaltung reduziert, da erst kurz vor der Montage die Montageelemente mit den Distanzstücken verbunden werden müssen. Dies wird dadurch erreicht, dass die Distanzstücke nicht im Wege einer Vorkonfektionierung mit den Montageelementen verschweißt werden müssen. Die Distanzstücke können vielmehr erst kurz vor der Montage am Nutzfahrzeug formschlüssig, bedarfsweise rein formschlüssig, mit den Montageelementen verbunden werden.

Zudem besteht grundsätzlich keine Beschränkung hinsichtlich der Bauart der verwendeten Achseneinheit. Die Achseneinheit kann eine Achse umfassen, die Räder auf gegenüberliegenden Seiten des Nutzfahrzeugs miteinander verbindet. Dabei kann es sich bedarfsweise um eine starre Achse handeln. Dies ist aber nicht erforderlich. Auch eine sogenannte Einzelradaufhängung, bei denen die Räder auf gegenüberliegenden Seiten des Nutzfahrzeugs nicht über eine durchgehende Achse miteinander verbunden sind, kann eine Achseneinheit im Sinne der Erfindung darstellen bzw. umfassen. Die Achseneinheit bedarf auch nicht einer Achse im klassischen Sinne. Die Achseneinheit ist lediglich so ausgebildet, dass sich die Anschlageinrichtung an der Achseneinheit abstützen kann, ohne diese nachhaltig zu beschädigen. Dabei kann sich die Anschlageinrichtung beispielsweise an einer Achse oder einer Lenkereinheit, insbesondere wenigstens einem Längslenker oder wenigstens einem Querlenker, der Achseneinheit abstützen. Auch dies ist aber lediglich bevorzugt und in keiner Weise zwingend.

Bei einer ersten bevorzugten Ausgestaltung des Nutzfahrzeugs ist das Distanzstück unverlierbar und formschlüssig auf das Montageelement aufgesteckt. Dadurch kann die Anschlageinrichtung sehr einfach und schnell gefertigt werden, so dass die Fertigung des Nutzfahrzeugs durch die Herstellung der Anschlageinrichtung erst kurz vor dessen Montage am Nutzfahrzeug nicht beeinträchtigt wird.

Zur weiteren Vereinfachung der Herstellung sowie zur weiteren Kostensenkung ist es zweckmäßig, wenn das Distanzstück als Strangpressprofil oder als Extrusionsprofil ausgebildet ist. Derartige Profile lassen sich problemlos mit demselben Verfahren und denselben Maschinen in unterschiedlichen Längen herstellen. Im Falle von Strangpressprofilen bietet sich der Verarbeitbarkeit und der mechanischen Eigenschaften halber die Verwendung von Aluminium an, während sich im Falle von Extrusionsprofilen aus denselben Gründen die Verwendung eines wenigstens ein Polyamid (PA) aufweisenden, insbesondere thermoplastischen, Kunststoffs anbietet.

In diesem Zusammenhang ist es besonders einfach in der Herstellung, wenn das Distanzstück ein abgelängtes Teilstück eines Strangpressprofils oder Extrusionsprofils ist. Das Distanzstück kann dann bedarfsweise erst unmittelbar vor seiner Verwendung in der jeweils gewünschten Länge vom Stangpressprofil oder dem Extrusionsprofil abgelängt, beispielsweise abgeschnitten oder abgesägt, werden. Dadurch wird die Lagerhaltung erheblich vereinfacht. Zudem kann noch zu einem sehr späten Fertigungszeitpunkt die Fahrhöhe des Nutzfahrzeugs mehr oder weniger individuell angepasst werden.

Eine einfache, dauerhafte und stabile Montage des Montageelements kann erreicht werden, wenn das Montageelement an der Rahmenstruktur verschraubt wird. Alternativ oder zusätzlich kann die Verbindung des Montageelements der Einfachheit halber vorzugsweise von der Seite erfolgen, was zusätzlich der Aussteifung der Verbindung dient.

Um trotz der Verschraubung des Montageelements ein hohes Maß an Flexibilität bei der Montage bereitstellen zu können, kann das Montageelement wenigstens ein Langloch aufweisen. Alternativ oder zusätzlich kann auch die Rahmenstruktur wenigstens ein Langloch aufweisen. Das Montageelement kann dann in unterschiedlichen Positionen montiert werden, ohne Öffnungen oder Bohrungen der Rahmenstruktur und/oder des Montageelements an die Montageposition anpassen zu müssen. Besonders bevorzugt ist es in diesem Zusammenhang, wenn die Rahmenstruktur ein Lochbild mit mehreren Löchern, bedarfsweise wenigstens teilweise Langlöchern, aufweist, die für die Verschraubung mit dem Montageelement in Frage kommen, und das Montageelement wenigstens eine Reihe von Löchern, insbesondere Langlöchern, aufweist, von denen wenigstens zwei in Überdeckung mit zwei Löchern der Rahmenstruktur bringbar sind. Dadurch wird die Flexibilität bei der Montage der Anschlageinrichtung weiter erhöht. Um in einfacher Weise unterschiedlichen Ausgestaltungen der Nutzfahrzeuge Rechnung tragen zu können, ist es bevorzugt, wenn die Längserstreckung der Langlöcher des Montageelements und/oder des Rahmenelements wenigstens teilweise im Wesentlichen parallel und/oder senkrecht zur Längserstreckung des Nutzfahrzeugs vorgesehen ist. Über die Kombination von Langlöchern in Längsrichtung des Nutzfahrzeugs im Rahmenelement und Langlöchern senkrecht zur Längsrichtung des Nutzfahrzeugs im Montageelement und umgekehrt kann ein besonders hohes Maß an Flexibilität bei der Montage des Montageelements bereitgestellt werden.

Das Montageelement kann alternativ oder zusätzlich an unterschiedlichen Stellen, insbesondere längs der Rahmenstruktur, montiert werden, wenn das Monateelement wenigstens zwei Langlöcher in einer Richtung parallel zur Längserstreckung des Nutzfahrzeugs nebeneinander aufweist. Vorzugsweise sind in dieser Richtung wenigstens zwei Reihen von übereinander angeordneten Langlöchern vorgesehen. So wird eine noch größere Montageflexibilität erreicht. Grundsätzlich kann natürlich auch wenigstens teilweise auf die Verwendung von Langlöchern zugunsten von Bohrungen verzichtet werden. Dies kann grundsätzlich eine verringerte Montageflexibilität zur Folge haben, die jedoch bedarfsweise tolerierbar sein kann. Insbesondere kann es zweckmäßig sein, in der Rahmenstruktur auf Langlöcher zu verzichten, um die Rahmenstruktur nicht unnötig zu schwächen, und stattdessen im Montageelement die nötigen Langlöcher vorzusehen, um die gewünschte Flexibilität bei der Montage des Montageelements am Rahmenelement zu erreichen.

Die Montage des Distanzstücks am Montageelement und damit am Nutzfahrzeug kann einfach und schnell erfolgen, wenn das Distanzstück auf einen Schenkel des Montageelements aufgesteckt bzw. aufgeschoben wird. Bei dem entsprechenden Schenkel handelt es sich der Einfachheit halber um einen sich bezogen auf das untere Ende der Rahmenstruktur nach oben erstreckenden Schenkel. So kann das Distanzstück einfach von oben aufgeschoben werden, ohne die Gefahr des versehentlichen Lösens der Verbindung zwischen dem Distanzstück und dem Montageelement. Das ist insbesondere dann der Fall, wenn sich der entsprechende Schenkel des Montageelements im Wesentlichen senkrecht nach oben und/oder senkrecht zur Längserstreckung des Nutzfahrzeugs, wahlweise des Ladebodens, nach oben erstreckt. Dabei ist es für eine unverlierbare Verbindung zwischen dem Distanzstück und dem Montageelement grundsätzlich zweckmäßig, wenn zwischen beiden ein Formschluss in einer Richtung nach unten, etwa senkrecht zur Längserstreckung des Nutzfahrzeugs, wahlweise des Ladebodens, besteht.

Alternativ oder zusätzlich kann das Distanzstück wenigstens teilweise zwischen der Rahmenstruktur und einem sich unter der Rahmenstruktur zur Seite erstreckenden Schenkel des Montageelements vorgesehen sein. Dabei kann sich der Schenkel parallel zur Rahmenstruktur, zur Längserstreckung des Nutzfahrzeugs und/oder zum Ladeboden des Nutzfahrzeugs erstrecken. Auf diese Weise kann das Distanzstück leicht montiert und bedarfsweise exakt positioniert werden, etwa wenn es mit einem oberen Ende an der Rahmenstruktur anliegt, was zudem der Kraftableitung von der Achseneinheit an die Rahmenstruktur dienlich ist.

Weiter bevorzugt ist es in diesem Zusammenhang, wenn das Distanzstück formschlüssig von dem sich unter der Rahmenstruktur zur Seite erstreckenden Schenkel des Montageelements getragen, wird. Dieser Formschluss kann in einer Richtung nach unten wirken. So kann in einfacher Weise ein Formschluss zwischen dem Distanzstück und dem Montageelement vorgesehen sein, der ein Herabfallen des Distanzstücks nach unten verhindert. Das Distanzstück kann dabei auf dem sich unter der Rahmenstruktur zur Seite erstreckenden Schenkel des Montageelements aufsitzen und, bedarfsweise zusätzlich, von dem nach oben gerichteten Schenkel gehalten werden, und zwar beispielsweise in einer etwa horizontalen Ebene und/oder in einer Richtung senkrecht zu dem Formschluss mit dem sich zur Seite erstreckenden Schenkel. Eine zusätzliche Fixierung des Distanzstücks ist dann nicht erforderlich.

Grundsätzlich bevorzugt ist das Montageelement L-förmig ausgebildet. Dies ermöglicht eine einfache Montage der Anschlageinrichtung, insbesondere seitlich, an der Rahmenstruktur und eine einfache Fixierung und Positionierung des Distanzstücks unter der Rahmenstruktur und am Montageelement.

Bei der Rahmenstruktur kann es sich insbesondere um eine Struktur des Chassis des Nutzfahrzeugs handeln, etwa um zusätzliche Bauteile zu vermeiden. Insbesondere kann die Rahmenstruktur der Einfachheit halber wenigstens einen Querträger und/oder wenigstens einen Längsträger umfassen oder durch wenigstens einen Querträger und/oder wenigstens einen Längsträger gebildet sein. Mithin ist es bevorzugt, wenn die Anschlageinrichtung an einem Längsträger oder Querträger festgelegt ist, der Teil des Chassis des Nutzfahrzeugs sein kann. Dabei ist es zur Erhöhung der Flexibilität bei der Anordnung der wenigstens einen Achseneinheit bevorzugt, wenn die Anschlageinrichtung an einem Längsträger des Nutzfahrzeugs festgelegt ist. Grundsätzlich ist es auch möglich, dass die Rahmenstruktur zusätzlich zum eigentlichen Chassis des Nutzfahrzeugs vorgesehen ist, wobei die Rahmenstruktur alternativ oder zusätzlich wenigstens einen Längsträger und/oder wenigstens einen Querträger zur Montage der wenigstens einen Anschlageinrichtung aufweisen kann. Grundsätzlich bevorzugt ist es zudem, wenn einer Achseneinheit zwei Anschlageinrichtungen zugeordnet sind, und zwar insbesondere auf gegenüberliegenden Seiten der Achseneinheit, der Rahmenstruktur oder des Chassis und/oder an Längsträgern auf gegenüberliegenden Seiten des Nutzfahrzeugs. Zusätzlich oder alternativ kann jeder Achseneinheit des Nutzfahrzeugs bedarfsweise wenigstens eine Anschlageinrichtung zugeordnet sein. Jeder Achseneinheit, die eine Achse umfasst, welche Räder auf gegenüberliegenden Seiten des Nutzfahrzeugs miteinander verbindet, können vorzugsweise zwei Anschlageinrichtungen ebenfalls an gegenüberliegenden Seiten des Nutzfahrzeugs zugeordnet sein.

Zur einfachen, insbesondere seitlichen, Montage der Anschlageinrichtung bzw. des Montageelements ist es dabei grundsätzlich bevorzugt, wenn die Rahmenstruktur, der Längsträger oder Querträger nach Art eines Z-Trägers ausgebildet ist. Es kann also ein Z-förmiger Querschnitt vorgesehen sein, wobei die aneinander angrenzenden Profilabschnitte vorzugsweise im Wesentlichen senkrecht zueinander ausgerichtet sind. Dann kann z.B. in einfacher Weise ein im Wesentlichen rechtwinklig abgekanteter L-förmiger Winkel als Montageelement Verwendung finden. Alternativ kann die Rahmenstruktur, der Längsträger oder der Querträger aber auch einen I-förmigen Querschnitt aufweisen oder nach Art eines Kastenprofils mit einem rechteckigen oder quadratischen Querschnitt ausgebildet sein. Prinzipiell sind noch weitere aus dem Stand der Technik bekannte Trägerquerschnitte denkbar.

Aus Gründen der Stabilität und aus Kostengründen kann die Rahmenstruktur, insbesondere der Längsträger oder der Querträger, aus Stahl gefertigt sein. Zudem ist es aus Kostengründen zweckmäßig, die Rahmenstruktur, insbesondere den Längsträger oder den Querträger, durch Rollieren zu fertigen.

Dabei kann die Stabilität grundsätzlich kostengünstig und durch geringen Materialeinsatz weiter gesteigert werden, wenn im Bereich der Anschlageinrichtung eine Verstärkungskonsole an der Rahmenstruktur vorgesehen ist. Diese Verstärkungskonsole kann dabei zwei winklig, insbesondere senkrecht, zueinander verlaufende Abschnitte der Rahmenstruktur, insbesondere des Längsträgers oder des Querträges, miteinander verbinden. Dies kann sowohl mittels Schweißverbindungen, Schraubverbindungen oder Nietverbindungen erfolgen, wobei Schweißverbindungen wegen der nachteiligen Beeinflussung des Herstellungsprozesses des Nutzfahrzeugs insgesamt weniger bevorzugt sind. Aus demselben Grund sind Schraubverbindungen besonders bevorzugt. Alternativ oder zusätzlich kann ein Winkelprofil zwischen der Verstärkungskonsole und der Rahmenstruktur, insbesondere des Längsträgers oder Querträgers, vorgesehen sein. Das Winkelprofil kann sich bedarfsweise längs im Wesentlichen der gesamten Rahmenstruktur, insbesondere des Längsträgers oder Querträgers, erstrecken.

Das Montageelement kann der Langlebigkeit halber aus Blech gefertigt sein. Aus Kostengründen bietet sich in diesem Zusammenhang insbesondere die Verwendung von Stahlblech an.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug in einer perspektivischen Ansicht,
- Fig. 2: ein Detail der Radaufhängung des Nutzfahrzeugs aus Fig. 1 in einer Seitenansicht,
- Fig. 3: eine Anschlageinrichtung der Radaufhängung aus Fig. 2 in einer perspektivischen Ansicht,
- Fig. 4: ein Distanzstück der Anschlageinrichtung aus Fig. 3 in einer perspektivischen Ansicht und
- Fig. 5: ein Detail der Radaufhängung aus Fig. 2 in einer Querschnittsansicht.

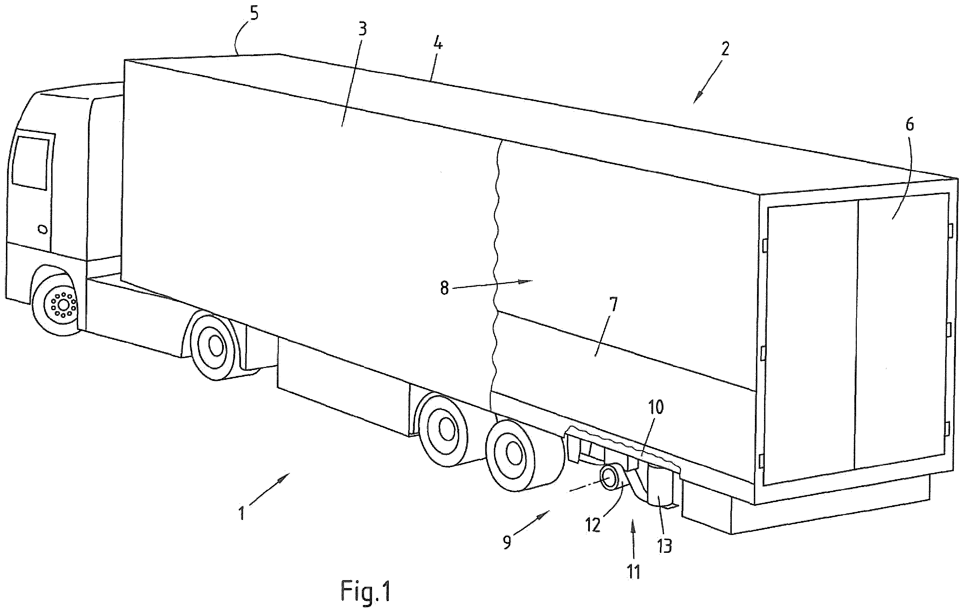

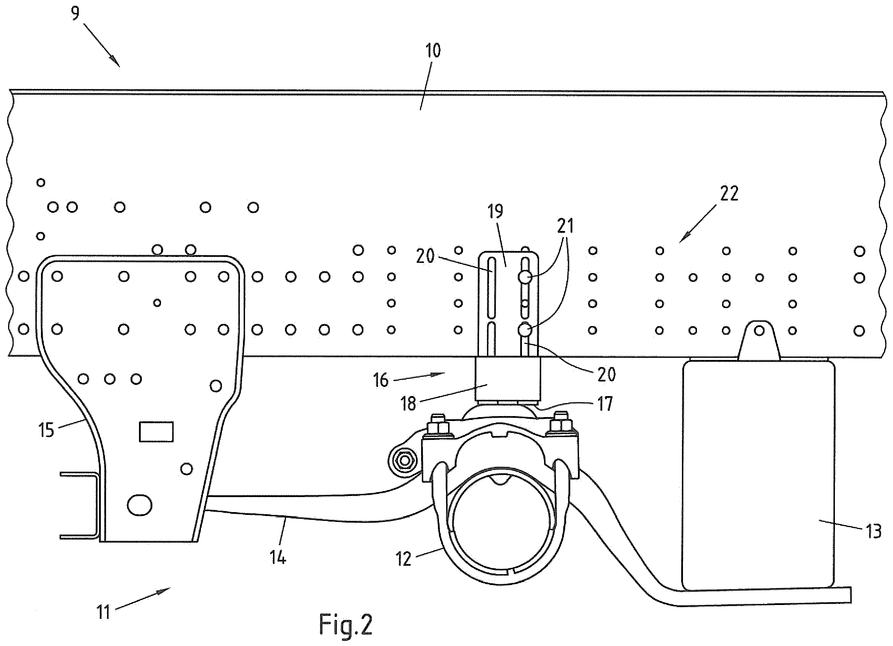

In der Fig. 1 ist ein Nutzfahrzeug 1 mit einem Nutzfahrzeugaufbau 2 in Form eines Kofferaufbaus mit festen Seitenwänden 3, einem festen Dach 4, einer festen Stirnwand 5, einer zwei Flügeltüren aufweisenden Rückwand 6 sowie einem Ladeboden 7 dargestellt. Das Innere des Nutzfahrzeugaufbaus 2 definiert einen Laderaum 8 zum Transport von Gütern im öffentlichen Straßenverkehr. Der Nutzfahrzeugaufbau wird von einem eine Rahmenstruktur umfassenden Chassis 9 des Nutzfahrzeugs 1 getragen. Das Chassis 9 umfasst dabei Querträger und Längsträger 10, an denen eine Radaufhängung 11 montiert ist. Die Radaufhängung 11 umfasst beim dargestellten und insoweit bevorzugten Nutzfahrzeug 1 drei Achseneinheiten 12, die jeweils über eine Luftbälge 13 aufweisende Luftfederung federgelagert sind. Dazu sind die Achseneinheiten 12 mit Längslenkern 14 versehen, die auf einer Seite der Achseneinheiten 12 an einem Federbock 15 festgelegt sind und an der anderen Seite an einem mit einem Längsträger 10 des Chassis 9 verbundenen Luftbalg 13 angreifen. In der Fig. 2 ist die Radaufhängung 11 des Nutzfahrzeugs 1 im Detail dargestellt. Am Längsträger 10 ist oberhalb der Achseneinheit 12 eine Anschlageinrichtung 16 vorgesehen, die eine Anschlagfläche 17 für die Achseneinheit 12 etwa für den Fall bereitstellt, dass die Luft aus dem Luftbalg 13 entweicht. Der Längsträger 10 sitzt dann mit der Anschlageinrichtung 16, insbesondere der Anschlagfläche 17, auf der Achseneinheit 12 auf. Dabei definiert die Anschlageinrichtung 16 den vertikalen Abstand zwischen dem Längsträger 10 und der Achseneinheit 12, jedenfalls bei horizontal ausgerichtetem Nutzfahrzeug 1. Genauer gesagt wird dieser Abstand von einem Distanzelement 18 der Anschlageinrichtung 16 definiert, das von einem seitlich mit dem Längsträger 10 verschraubten Montageelement 19 formschlüssig gehalten wird.

Das Montageelement 19 weist zwei parallele und von oben nach unten verlaufende Reihen von Langlöchern 20 auf, mit denen das Montageelement 19 über Schrauben 21 in unterschiedlichen Positionen in vertikaler und horizontaler Richtung, also etwa senkrecht zum Ladeboden 7 und längs des Längsträgers 10, an einem bestimmten Lochbild 22 des Längsträgers 10 festgelegt werden kann, und zwar je nach Fahrhöhe und je nach Achseneinheit 12.

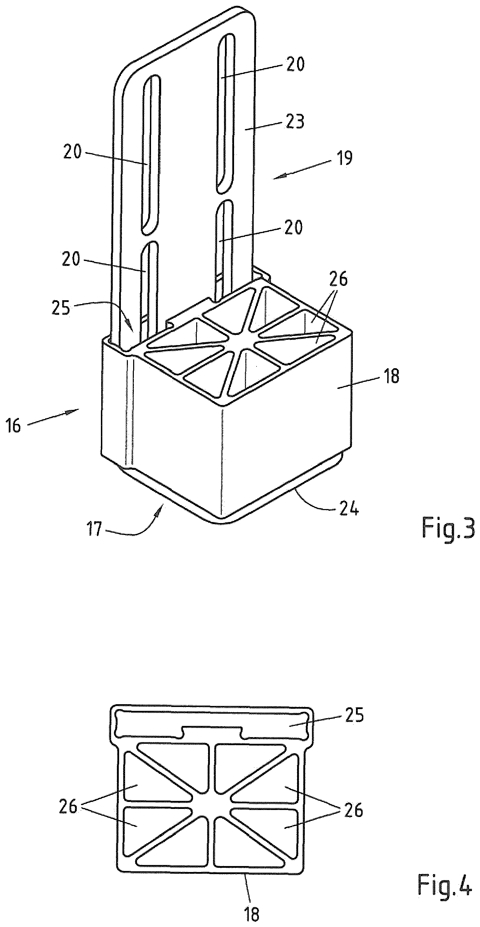

Wie insbesondere in der Fig. 3 dargestellt ist, ist das Montageelement 19 zudem L-förmig ausgebildet. Das Montageelement 19 umfasst dabei zwei im Wesentlichen senkrecht zueinander verlaufende Schenkel 23,24. Einer der Schenkel 23 verläuft von oben nach unten und ist seitlich mit dem Längsträger 10 verschraubt. Auf diesen Schenkel 23 ist das Distanzstück 18 mit einer Aussparung 25 von oben nach unten aufgesteckt. Dabei ist das Distanzstück 18 in einer Ebene parallel zur Längserstreckung des Nutzfahrzeugs 1 formschlüssig an dem nach oben ragenden Schenkel 23 des Montageelements 19 gehalten. Nach unten sitzt das Distanzstück 18 auf dem seitlich unter den Längsträger 10 ragenden Schenkel 24 des Montageelements 19 auf und wird somit nach unten von diesem Schenkel 24 formschlüssig gehalten. Nach oben liegt das Distanzstück 18 ferner formschlüssig am Längsträger 10 an.

In der Fig. 4 ist das Distanzstück 18 des dargestellten und insoweit bevorzugten Nutzfahrzeugs 1 im Detail dargestellt. Dieses Distanzstück 18 ist als Teil eines Strangpressprofils ausgebildet, von dem das Distanzstück 18 mit der gewünschten Länge angeschnitten worden ist. Zur Materialeinsparung sind im Distanzstück 18 daher parallel und im montierten Zustand von oben nach unten verlaufende Hohlräume 26 vorgesehen.

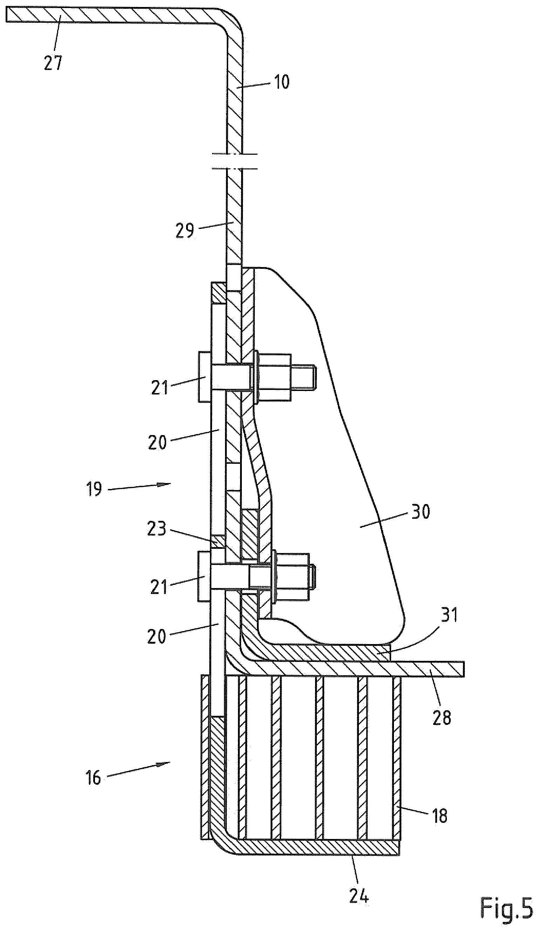

In der Fig. 5 ist ein Querschnitt durch den Längsträger 10 dargestellt. Der Längsträger 10 weist einen Z-förmigen Querschnitt mit einem oberen und einem unteren Längsträgergurt 27,28 auf, die zueinander parallel verlaufen. Die Längsträgergurte 27,28 verlaufen zudem senkrecht zu einem sich im Wesentlichen vertikal bzw. im Wesentlichen senkrecht zum Ladeboden 7 erstreckenden Abschnitt 29 des Längsträgers 10. Dieser Abschnitt 29 des Längsträgers 10 erstreckt sich zudem parallel zu dem seitlich mit dem Längsträger 10 verbundenen Schenkel 23 des Montageelements 19. Zudem verlaufen der weitere, sich seitlich unter dem Längsträger 10 erstreckende Schenkel 24 des Montageelements 19 und der untere Längsträgergurt 28 parallel zueinander.

Zur Verstärkung der Verbindung zwischen dem Längsträger 10 und der Anschlageinrichtung 16 ist beim dargestellten und insoweit bevorzugten Nutzfahrzeug 1 eine Verstärkungskonsole 30 vorgesehen, die jedoch nicht zwingend erforderlich wäre. Die Verstärkungskonsole 30 ist ähnlich eines Winkels ausgebildet und seitlich mit dem Längsträger 10 verschraubt. Zudem sitzt die Verstärkungskonsole 30 unten auf einem sich auf der Seite des unteren Längsträgergurts 28 längs des Längsträgers 10 erstreckenden Winkelprofil 31 auf, das beim dargestellten und insoweit bevorzugten Nutzfahrzeug 1 nach unten formschlüssig auf dem unteren Längsträgergurt 28 aufsitzt. Alternativ oder zusätzlich käme auch eine Verbindung, etwa eine Verschraubung, zwischen dem unteren Längsträgergurt 28 und der Verstärkungskonsole 30 in Frage.

Nicht im Einzelnen dargestellt ist, dass beim dargestellten und insoweit bevorzugten Nutzfahrzeug 1 den beiden Längsseiten des Nutzfahrzeugs 1 bzw. des Nutzfahrzeugaufbaus 2 jeweils ein Längsträger 10 der in der Fig. 2 dargestellten Art zugeordnet sein kann. Dabei ist zudem jeder der drei Achseneinheiten 12 des Nutzfahrzeugs 1 an jedem der Längsträger 10 eine Anschlageinrichtung 16, wie in der Fig. 2 dargestellt, zugeordnet. Die Achseneinheiten 12 umfassen dabei jeweils eine durchgehende Achse, welche die Räder an beiden Längsseiten des Nutzfahrzeugs 1 miteinander verbindet. Zudem wird darauf hingewiesen, dass bezogen auf das dargestellte und insoweit bevorzugte Nutzfahrzeug 1 die Rahmenstruktur durch den Längsträger 10 gegeben angesehen wird. Die Rahmenstruktur kann bedarfsweise auch durch einen Querträger oder aus wenigstens einem Längsträger und wenigstens einem Querträger, einer Mehrzahl von Längsträgern oder Querträgern sowie einer anders aufgebauten Rahmenstruktur gebildet werden.

## Patentansprüche

1. Nutzfahrzeug (1), insbesondere Lastkraftwagen, Anhänger oder Sattelauflieger, mit wenigstens einer Rahmenstruktur, wenigstens einer Achseneinheit (12) und wenigstens einer eine Anschlagfläche (17) für die Achseneinheit (12) bereitstellenden Anschlageinrichtung (16), wobei die Anschlageinrichtung (16) ein an der Rahmenstruktur festgelegtes Montageelement (19) und ein zwischen der Rahmenstruktur und der Anschlagfläche (17) vorgesehenes Distanzstück (18) aufweist, wobei das Distanzstück (18) unverlierbar und formschlüssig am Montageelement (19) festgelegt ist,
**dadurch gekennzeichnet, dass**
die Anschlagfläche (17) durch das Montageelement (19) gebildet wird.

2. Nutzfahrzeug (1) nach Anspruch 1,
**dadurch gekennzeichnet, dass**
das Distanzstück (18) unverlierbar und formschlüssig auf das Montageelement (19) aufgesteckt ist.

3. Nutzfahrzeug (1) nach Anspruch 1 oder 2,
**dadurch gekennzeichnet, dass**
das Distanzstück (18) als Strangpressprofil, insbesondere aus Aluminium, oder als Extrusionsprofil, insbesondere wenigstens ein Polyamid (PA) aufweisend, gefertigt ist.

4. Nutzfahrzeug (1) nach einem der Ansprüche 1 bis 3,
**dadurch gekennzeichnet, dass**
das Distanzstück (18) ein abgelängtes Teilstück eines Strangpressprofils oder Extrusionsprofils ist.

5. Nutzfahrzeug (1) nach einem der Ansprüche 1 bis 4,
**dadurch gekennzeichnet, dass**
das Montageelement (19), vorzugsweise seitlich, an der Rahmenstruktur, verschraubt ist.

6. Nutzfahrzeug (1) nach Anspruch 5,
**dadurch gekennzeichnet, dass**
das Montageelement (19) oder/oder die Rahmenstruktur wenigstens ein Langloch (20), vorzugsweise wenigstens eine Reihe von Langlöchern, zur Verschraubung des Montageelements (19) mit der Rahmenstruktur aufweist.

7. Nutzfahrzeug (1) nach einem der Ansprüche 1 bis 6,
**dadurch gekennzeichnet, dass**
das Distanzstück (18) auf einen sich bezogen auf das untere Ende der Rahmenstruktur, vorzugsweise im Wesentlichen senkrecht, nach oben erstreckenden Schenkel des Montageelements (19), vorzugsweise von oben nach unten, aufgesteckt ist.

8. Nutzfahrzeug (1) nach einem der Ansprüche 1 bis 7,
**dadurch gekennzeichnet, dass**
das Distanzstück (18) wenigstens teilweise zwischen der Rahmenstruktur und einem sich unter der Rahmenstruktur zur Seite erstreckenden Schenkel (24) des Montageelements (19) vorgesehen ist.

9. Nutzfahrzeug (1) nach Anspruch 8,
**dadurch gekennzeichnet, dass**
das Distanzstück (18), vorzugsweise in einer Richtung nach unten, formschlüssig von dem sich unter der Rahmenstruktur zur Seite erstreckenden Schenkel (24) des Montageelements (19) getragen wird.

10. Nutzfahrzeug (1) nach einem der Ansprüche 1 bis 9,
**dadurch gekennzeichnet, dass**
das Montageelement (19) L-förmig ausgebildet ist.

11. Nutzfahrzeug (1) nach einem der Ansprüche 1 bis 10,
**dadurch gekennzeichnet, dass**
die Anschlageinrichtung (16) an einem Längsträger oder Querträger (10) nach Art eines Z-Trägers, eines I-Trägers oder eines Katenprofils festgelegt ist.

12. Nutzfahrzeug (1) nach einem der Ansprüche 1 bis 11,
**dadurch gekennzeichnet, dass**
die Rahmenstruktur, insbesondere der Längsträger oder der Querträger (10), aus Stahl, vorzugsweise durch Rollieren, gefertigt ist.

13. Nutzfahrzeug (1) nach einem der Ansprüche 1 bis 12,
**dadurch gekennzeichnet, dass**
im Bereich der Anschlageinrichtung (16) eine Verstärkungskonsole (30) an der Rahmenstruktur vorgesehen ist.

14. Nutzfahrzeug (1) nach einem der Ansprüche 1 bis 13,
**dadurch gekennzeichnet, dass**
das Montageelement (19) aus Blech, vorzugsweise Stahlblech, gefertigt ist.

## Claims

1. Commercial vehicle (1), in particular lorry, trailer or semitrailer, having at least one frame structure, at least one axle unit (12) and at least one stop device (16) providing a stop surface (17) for the axle unit (12), wherein the stop device (16) has a mounting element (19) fixed on the frame structure and a spacer (18) provided between the frame structure and the stop surface (17), wherein the spacer (18) is fixed captively and positively on the mounting element (19),
**characterised in that**
the stop surface (17) is formed by the mounting element (19).

2. Commercial vehicle (1) according to Claim 1,
**characterised in that**
the spacer (18) is fitted captively and positively onto the mounting element (19).

3. Commercial vehicle (1) according to Claim 1 or 2,
**characterised in that**
the spacer (18) is constructed as an extruded profile, in particular made of aluminium, or as an extrusion profile, in particular having at least one polyamide (PA).

4. Commercial vehicle (1) according to any one of Claims 1 to 3,
**characterised in that**
the spacer (18) is a cut-to-length section of an extruded profile or extrusion profile.

5. Commercial vehicle (1) according to any one of Claims 1 to 4,
**characterised in that**
the mounting element (19) is bolted to the frame structure, preferably laterally.

6. Commercial vehicle (1) according to Claim 5,
**characterised in that**
the mounting element (19) and/or the frame structure has at least one elongated hole (20), preferably at least one row of elongated holes, for screwing the mounting element (19) to the frame structure.

7. Commercial vehicle (1) according to any one of Claims 1 to 6,
**characterised in that**
the spacer (18) is fitted, preferably from above downwards, to a leg of the mounting element (19), said leg extending upwards relative to the lower end of the frame structure, preferably substantially vertically.

8. Commercial vehicle (1) according to any one of Claims 1 to 7,
**characterised in that**
the spacer (18) is provided at least partially between the frame structure and a leg (24) of the mounting element (19) extending to the side under the frame structure.

9. Commercial vehicle (1) according to Claim 8,
**characterised in that**
the spacer (18) is positively supported, preferably in a downward direction, by the leg (24) of the mounting element (19) extending to the side under the frame structure.

10. Commercial vehicle (1) according to any one of Claims 1 to 9,
**characterised in that**
the mounting element (19) is L-shaped.

11. Commercial vehicle (1) according to any one of Claims 1 to 10,
**characterised in that**
the stop device (16) is fixed to a longitudinal beam or transverse beam (10) in the manner of a Z-beam, an I-beam or a box profile.

12. Commercial vehicle (1) according to any one of Claims 1 to 11,
**characterised in that**
the frame structure, in particular the longitudinal beam or the transverse beam (10) is made of steel, preferably by roller-burnishing.

13. Commercial vehicle (1) according to any one of Claims 1 to 12,
**characterised in that**
a reinforcing bracket (30) is provided on the frame structure in the region of the stop device (16).

14. Commercial vehicle (1) according to any one of Claims 1 to 13,
**characterised in that**
the mounting element (19) is made of sheet metal, preferably sheet steel.

## Revendications

1. Véhicule utilitaire (1), en particulier camion, remorque ou semi-remorque, avec au moins une structure de châssis, au moins un ensemble essieux (12) et au moins un dispositif de butée (16) fournissant une surface de butée (17) pour l'ensemble essieux (12), le dispositif de butée (16) présentant un élément de montage (19) fixé sur la structure de châssis et une pièce d'espacement (18) prévue entre la structure de châssis et la surface de butée (17), la pièce d'espacement (18) étant fixée de manière imperdable et par liaison de forme sur l'élément de montage (19)
**caractérisé en ce que**
la surface de butée (17) est formée par l'élément de montage (19).

2. Véhicule utilitaire (1) selon la revendication 1,
**caractérisé en ce que**
la pièce d'espacement (18) est insérée de manière imperdable et par liaison de forme sur l'élément de montage (19).

3. Véhicule utilitaire (1) selon la revendication 1 ou 2,
**caractérisé en ce que**
la pièce d'espacement (18) est fabriquée en tant que profilé filé, en particulier en aluminium, ou en tant que profilé extrudé, en particulier présentant au moins un polyamide (PA).

4. Véhicule utilitaire (1) selon l'une des revendications 1 à 3,
**caractérisé en ce que**
la pièce d'espacement (18) est une partie coupée à longueur d'un profilé filé ou d'un profilé extrudé.

5. Véhicule utilitaire (1) selon l'une des revendications 1 à 4,
**caractérisé en ce que**
l'élément de montage (19) est vissé, de préférence latéralement, sur la structure de châssis.

6. Véhicule utilitaire (1) selon la revendication 5,
**caractérisé en ce que**
l'élément de montage (19) et/ou la structure de châssis présente au moins un trou oblong (20), de préférence au moins une rangée de trous oblongs, pour le vissage de l'élément de montage (19) à la structure de châssis.

7. Véhicule utilitaire (1) selon l'une des revendications 1 à 6,
**caractérisé en ce que**
la pièce d'espacement (18) est insérée, de préférence d'en haut en bas, sur une branche de l'élément de montage (19) s'étendant vers le haut par rapport à l'extrémité inférieure de la structure de châssis, de préférence essentiellement perpendiculairement.

8. Véhicule utilitaire (1) selon l'une des revendications 1 à 7,
**caractérisé en ce que**
la pièce d'espacement (18) est prévue au moins partiellement entre la structure de châssis et une branche (24) de l'élément de montage (19) s'étendant latéralement sous la structure de châssis.

9. Véhicule utilitaire (1) selon la revendication 8,
**caractérisé en ce que**
la pièce d'espacement (18) est portée, de préférence dans une direction vers le bas, par liaison de forme, par la branche (24) de l'élément de montage (19) s'étendant latéralement sous la structure de châssis.

10. Véhicule utilitaire (1) selon l'une des revendications 1 à 9,
**caractérisé en ce que**
l'élément de montage (19) est conçu en forme de L.

11. Véhicule utilitaire (1) selon l'une des revendications 1 à 10,
**caractérisé en ce que**
le dispositif de butée (16) est fixé sur un support longitudinal ou un support transversal (10) à la manière d'un support en Z, d'un support en | ou d'un profilé de boîte.

12. Véhicule utilitaire (1) selon l'une des revendications 1 à 11,
**caractérisé en ce que**
la structure de châssis, en particulier le support longitudinal ou le support transversal (10), est fabriquée en acier, de préférence par brunissage au rouleau.

13. Véhicule utilitaire (1) selon l'une des revendications 1 à 12,
**caractérisé en ce que**
une console de renforcement (30) est prévue sur la structure de châssis dans la zone du dispositif de butée (16).

14. Véhicule utilitaire (1) selon l'une des revendications 1 à 13,
**caractérisé en ce que**
l'élément de montage (19) est fabriqué en tôle, de préférence en tôle d'acier.
